# EUROPEAN PATENT APPLICATION

(11) **EP 2 383 797 A1**
(43) Date of publication of application: **02.11.2011**
(21) Application number: 09838690.7
(22) Date of filing: 05.06.2009
(51) Int. Cl.: H01L 31/045

(54) **MOBILE SOLAR UNIT WITH LIGHTING TOWER**

(30) Priority: 23.01.2009 ES 200900151 U
(71) Applicant: Romero Lampón, José Luis, 15316 coirós (A Coruña) (ES)
(72) Inventor: Romero Lampón, José Luis, 15316 coirós (A Coruña) (ES)
(74) Representative: Molina Garcia, Julia
(86) International application number: PCT/ES2009/000317
(87) International publication number: WO 2010/084212

(57) **Abstract**

Mobile solar unit that can be moved to different places where a power point or lighting is required, **characterised in that** it is based on a trailer incorporating a structure the top of which is fitted with a collapsible frame that when stowed is arranged horizontally on the structure, and that also carries three superposed collapsible solar panels. The structure is fitted with a fixed inclined frame, that supports three more superposed collapsible solar panels, having a mechanical system using a hear motor inside the body work of the generator that makes it possible to raise or lower the upper platform and thereby situated the aforementioned collapsible solar panel as a continuation of the solar panels on the fixed inclined support; and then enable the superposed solar panels to be folded out, such that they are all inclined, coplanar and ready to capture solar energy.

## Description

### Object of the invention

The present invention, as expressed in the title of this specification, consists of a mobile solar unit which can be moved to different places where a power point or lighting is required, such as for example in rural areas.

A tower with three light projectors is disposed at the back of the mobile solar generator. The tower is telescopically extendable using a hydraulic system.

### Background of the invention

The use of mobile solar units is known in the state of the art, as in the case of the utility model with application number 8803353, which discloses a mobile solar energy station consisting of a body fitted with support legs and transport wheels, in such a manner that batteries are disposed in the interior of the body which store electrical energy produced by photovoltaic panels also disposed in the interior of the body, which can be extended through grooves made on the upper side of the body wherein they appear, also comprising a control panel for charge and discharge measuring instruments and power points with different voltages for connecting manual and/or industrial electric machines thereto.

Another example of these types of units is disclosed in the European patent with application number 02747743 which incorporates, in addition to solar panels, a wind turbine and hydrogen system for producing and storing hydrogen wherefrom electricity is obtained through hydrogen oxidation.

In these two patents, the units only incorporate two solar panels, considerably limiting energy production.

Utility model number 200801065, owned by José Luis Romero Lampón, is also considered a reference for this invention.

### Description of the invention

Consequently, a portable solar unit is required which will allow the production of a greater amount of electrical energy.

In order to achieve the previously indicated objectives, the invention implements a new mobile solar unit which is **characterised in that** it consists of a trailer incorporating a structure the top of which is fitted with a collapsible frame, in such a manner that when stowed it is disposed horizontally on the structure, and that also carries three superposed collapsible solar panels. The structure is also fitted with a fixed inclined frame that supports three more superposed collapsible solar panels.

The structure is also equipped, in the invention, with a mechanical system using a gear motor inside the bodywork of the generator, whereby traction is applied to a solidary pinion axle which makes it possible to raise or lower the upper platform by applying traction to lateral arms (by means of toothed racks) anchored to the collapsible platform of the upper frame, thereby situating the aforementioned collapsible solar panels as a continuation of the solar panels on the fixed inclined support; the superposed solar panels can then be folded out, such that they are all fixed in a coplanar inclined configuration and ready to capture solar energy.

In the preferred embodiment of the invention, two vertical arms have been installed on the lateral ends of the collapsible upper platform. The function of these arms is structural, making it possible to raise the upper platform while the assembly is moved by applying traction to toothed racks solidarily joined to the arms, and applying mechanical traction by means of a gear motor and its corresponding axle and pinions, as mentioned earlier.

With regard to the element that fixes the collapsible frame in its different positions, it must be pointed out that, in the preferred embodiment of the invention, it will be fixed by pinions solidarily joined to the rack disposed on the lateral arms. In turn, traction shall be applied to said pinions by means of a gear motor, due to which it can be concluded that fixation of the collapsible frame is carried out by means of the gear motor and its complementary mechanical system.

The superposed collapsible solar panels are joined by means of hinges to facilitate unfolding and folding thereof, according to the needs of the unit.

Folding and unfolding of the superposed solar modules is carried out by a total of four gear motors (one for each of the four fold-out modules) disposed on the rotation hinges of the photovoltaic modules.

The movement of the collapsible frame and of the four photovoltaic modules is controlled by the electric motors of the gear motors, using position sensors for performing the start and stop functions of each of the modules. All of the movements are automated in a control panel, wherein the operator handling the equipment gives the order to open or close, and the control device is in charge of starting up the different mechanisms in the adequate sequence in order to dispose the equipment in its optimum position, according to the sequence assigned by the operator.

A tower with three light projectors is disposed at the back of the mobile solar generator. The tower is telescopically extendable using a hydraulic system. Likewise, the horizontal support platform for the light projectors has a motorised rotation system, allowing orientation of the lighting generated by the equipment from the control panel thereof, disposed at the base of the lighting tower.

The structure defines a cabinet for housing the electronic elements conventionally used to process the captured solar energy and the production of electricity for feeding receivers.

Additionally, the fixed inclined frame constitutes a space for housing the batteries that store electrical energy, which are conventionally used in applications of this type.

In order to help better understand this specification and forming integral part thereof, a series of drawings have been included below wherein the object of the invention is represented in an illustrative and non-limiting manner.

### Brief description of the figures

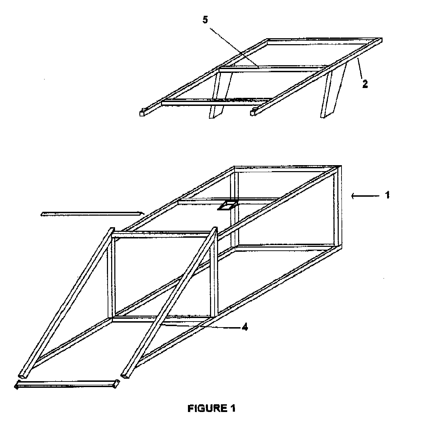

Figure 1 shows a schematic perspective view of the structure which is fixed to the trailer, which has not been represented. Additionally, an exploded view of the collapsible frame which is disposed on the structure is also shown.

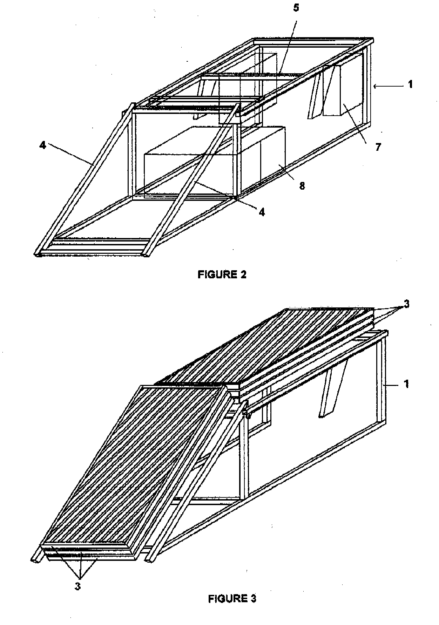

Figure 2 shows a view of the preceding figure with the collapsible frame disposed on the structure.
Figure 3 shows an equivalent view to that of the preceding figure, wherein the solar panels have been incorporated.

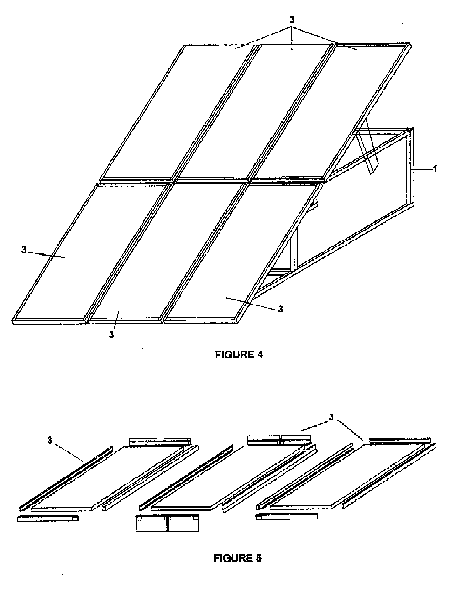

Figure 4 shows an equivalent view to that of the preceding figure, with the solar panels folded out.
Figure 5 shows an exploded perspective view of a possible example of embodiment of three collapsible solar panels.

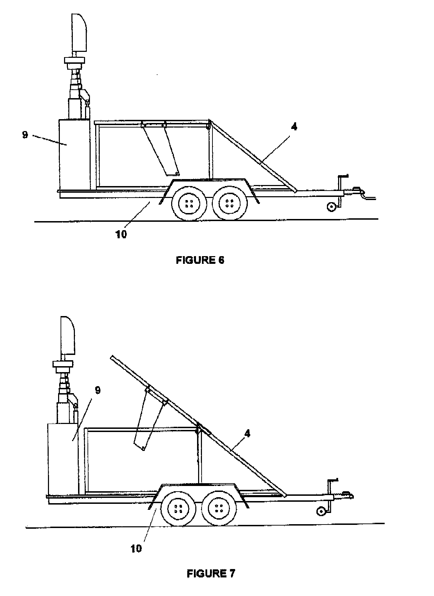

Figure 6 shows an example of application of the unit represented in the preceding figures on a trailer whereto traction is applied by means of a vehicle, wherein the collapsible frame is disposed in its stowed horizontal position and the lighting tower is stowed.
Figure 7 shows an equivalent view to that of the preceding figure, with the collapsible frame in the folded-out position and the lighting tower stowed.

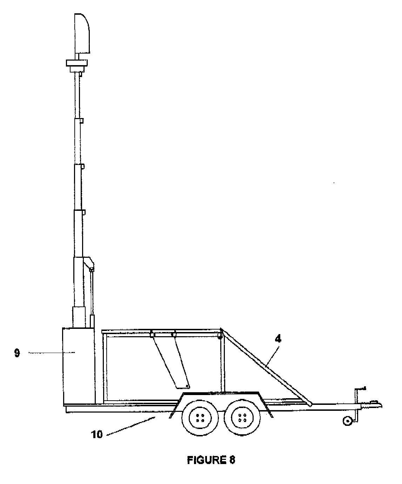

Figure 8 shows an example of application of the unit represented in the preceding figures on a trailer whereto traction is applied by means of a vehicle wherein the collapsible frame is disposed in its stowed horizontal position and the lighting tower is folded out.

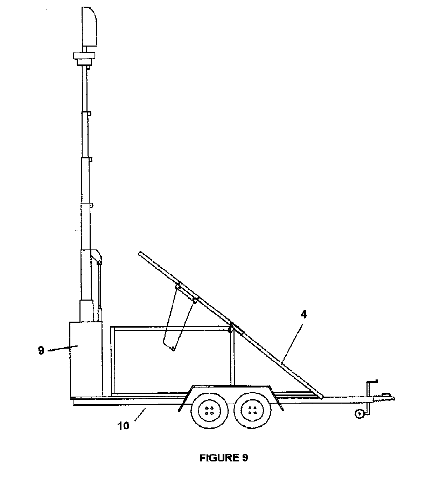

Figure 9 shows an equivalent view to that of the preceding figure, with the collapsible frame in the folded-out position and the lighting tower folded out.

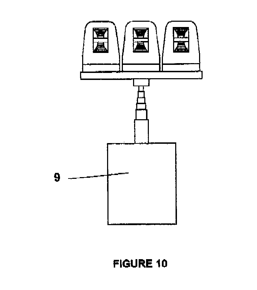

Figure 10 shows a top plan view of the lighting tower.

### Description of the preferred form of embodiment

A description of the invention based on the aforementioned figures is made below.

The invention comprises a structure (1) on the top of which a collapsible frame (2) which is articulated in corresponding points by means of the corresponding axis which has not been represented has been envisaged.

The collapsible frame (2) comprises a lateral portion with two arms which are used as structural elements for raising the platform, housing mechanical systems such as racks, pinions, bearings, etc., in its interior, whereto mechanical traction has been applied by means of an electric gear motor.

The structure (1) includes a fixed inclined frame (4) wherein three solar panels (3) have been envisaged, superposed and collapsible therebetween, for which purpose they are joined by means of hinges. Each of the two upper superposed modules incorporates an electric gear motor on the hinge which, with the collaboration of an electronic control system, governs aperture and closure of the modules.

Likewise, three panels (3) such as those previously described have been envisaged on the collapsible frame (2), wherein each of the two upper superposed modules incorporates an electric gear motor on the hinge which, with the collaboration of an electronic control system, governs the aperture and closure of the modules.

The entire previously described assembly is mounted on a trailer (10) whereto traction may be applied by means of a vehicle.

The frame (1) constitutes a cabinet which houses the electronic elements conventionally used for processing the captured solar energy, such as the electronic circuits, electrical switchboard (7), alternating current generator and batteries (8) that store the electrical energy produced, which are not described in greater detail due to being common knowledge and not being the object of the invention.

According to the description made, it is easily understood that once the trailer (10) has been moved to the place where a power point and/or lighting is required, the control panel is actuated, giving the order to open the modules, whereupon the system actuates the electric motors of the gear motors, which allows stowing of the collapsible frame (2) until disposing it in an inclined position wherein its solar panels (3) are situated as a continuation of the solar panels (3) disposed in the fixed inclined frame (4).

In this position and actuating the electric motors of the gear motors, the superposed solar panels (3) are stowed, in such a manner that these are folded out, allowing the six solar panels (3) to capture solar energy which is conventionally converted into electrical energy by means of circuits (7) and stored in the batteries (8), obtaining 12V and 24V direct current power point, as well as electrical energy in the form of monophasic or triphasic 230V and 400V alternating current at any place where the trailer (10) is moved. Likewise, the invention, on having a lighting tower (9) with projectors, is also capable of providing lighting at any place where the trailer (10) is moved.

The interior of the cabinet is accessed through a door for performing maintenance on the elements contained therein.

## Claims

1. Mobile solar unit with lighting tower, **characterised in that** it comprises a trailer (10) fitted with a structure (1) the top of which comprises a collapsible frame (2), that when stowed is disposed horizontally, and which carries three superposed collapsible solar panels (3), said structure (1) including a fixed inclined frame (4) which supports three more superposed collapsible solar panels (3) ; the solar unit also comprises a system for stowing the platform and automatically folding/unfolding it through electric gear motors, in order to situate the collapsible solar panels (3) of the collapsible frame (2) as a continuation of the solar panels (3) of the fixed inclined support (4), thereby enabling the superposed solar panels (3) to be folded out, such that they are all fixed in a coplanar inclined configuration and ready to capture solar energy.
Fixation of the position of each of the mobile elements is carried out through each of the electric gear motors.

2. Mobile solar unit with lighting tower, completely according to the preceding claim, **characterised in that** the collapsible frame (2) comprises a lateral portion with two arms which are used as structural elements for raising and fixing the platform, housing in their interior mechanical systems such as racks, pinions, bearings, etc., whereto mechanical traction is applied by means of an electric gear motor.

3. Mobile solar unit with lighting tower, completely according to the preceding claim, **characterised in that** the elements for fixing the collapsible frame (2) in an inclined position, in its folded-out position, comprise a rotation axis (5) envisaged in said collapsible frame (2).

4. Mobile solar unit with lighting tower, completely according to the preceding claims, **characterised in that** the upper solar panels (3) comprise traction elements actuated by electric gear motors for stowing thereof.

5. Mobile solar unit with lighting tower, completely according to the preceding claims, **characterised in that** the group of three superposed collapsible solar panels (3) are joined by means of hinges.

6. Mobile solar unit with lighting tower, completely according to the preceding claims, **characterised in that** the structure (1) defines a cabinet for housing the electronic elements (7, 8) conventionally used for processing the captured solar energy.

7. Mobile solar unit with lighting tower, completely according to the preceding claims, **characterised in that** the structure (1) defines an alternating current generator of the type conventionally used to supply monophasic and triphasic alternating current electricity.

8. Mobile solar unit with lighting tower, completely according to the preceding claims, **characterised in that** a lighting tower with three light projectors (9) is disposed at the back of the mobile solar generator. The tower is telescopically extendable using a hydraulic system. Additionally, the horizontal platform that supports the light projectors has a motorised rotation system.
